# EUROPEAN PATENT APPLICATION

(11) **EP 2 777 921 A2**
(43) Date of publication of application: **17.09.2014**
(21) Application number: 14160133.6
(22) Date of filing: 14.03.2014
(51) Int. Cl.: B29D 11/00

(54) **Method and apparatus for spatially locating lens components on a lens precursor**

(30) Priority: 15.03.2013 US 201313833444
(71) Applicant: Johnson & Johnson Vision Care Inc., Jacksonville, FL 32256 (US)
(72) Inventor: Pugh, Randall B., Jacksonville, FL Florida FL 32259 (US); Flitsch, Frederick A., New Windsor, NY New York NY 12553 (US)
(74) Representative: Carpmaels & Ransford LLP

(57) **Abstract**

This invention provides for Spatial Placement of Lens Components (301A, 301B, 401A, 405A, 410A) by Spatially Polymerizing portions of Fluent Lens Reactive Media (215) using one or more controlled projections of actinic radiation (561) to a Lens Precursor device (200). More specifically, the Lens Components Spatially Placed can include one or more of: electrical components, pigment particles, coatings, and active agents. The control of the actinic radiation can include the use of a voxel based lithography method using a digital micromirror device, a laser, or the use of a photomask.

## Description

### FIELD OF USE

This invention describes a method and apparatus for placing and fixing lens components onto a Lens Precursor that can be used for the fabrication of an Ophthalmic Lens. More specifically, the lens components may be spatially affixed and/or coated to serve a particular purpose of the Ophthalmic Lens.

### BACKGROUND OF THE INVENTION

Traditional Ophthalmic lenses are often made by cast molding, in which a reactive monomer material is deposited in a cavity defined between optical surfaces of opposing mold parts. To prepare a lens using such mold parts, an uncured hydrogel lens formulation is placed between a plastic disposable front curve mold part and a plastic disposable back curve mold part.

The front curve mold part and the back curve mold part are typically formed via injection molding techniques wherein melted plastic is forced into highly machined steel tooling with at least one surface of optical quality.

The front curve and back curve mold parts are brought together to shape the lens according to desired lens parameters. The lens formulation is subsequently cured by exposure to heat and light, thereby forming a lens. Following cure, the mold parts are separated and the cured lens formulation is generally limited to it being removed from the mold parts for hydration and packaging. However, the nature of cast molding processes and equipment can sometimes make it difficult to form lenses that can incorporate lens components in specific regions of the lens and specific to a particular purpose following cure without using pad printing techniques. Pad printing techniques are generally used for colorants and are limited to printing a color pattern or applying one or more layers on a lens surface.

As a result of the foregoing, additional methods for the manufacturing of Ophthalmic Lenses that can be conducive to the placement and/or coating of various lens components are desired.

### SUMMARY OF THE INVENTION

Accordingly, the present invention includes methods and apparatuses that can be used to deposit and Spatially affix Lens Components specific to a particular purpose onto a Lens Precursor device. Said Lens Precursor device can be processed into an Ophthalmic Lens, including for example an electro active contact lens, a cosmetic lens with a color pattern, a therapeutic lens or a combination thereof.

United States Patent Application No. 13/419,834, filed on March 14, 2012 and titled "Methods for Formation of an Ophthalmic Lens Precursor and Lens," the contents of which are relied upon and incorporated by reference, teaches methodology that can be used for the formation of a Lens Precursor device. Some important aspects related to the present invention can include the manufacturing of a Lens in a Free-Form manner, that is where one of two lens surfaces is formed without the need of using cast molding, lathing or other tooling, and that the Lens Precursor device can provide for a generally static Fluent Lens Reactive Media during the formation of an Ophthalmic Lens.

While the teachings of the aforementioned disclosure teach a Lens Precursor device that can include Fluent Lens Reactive Media, the present invention teaches using said Fluent Lens Reactive Media portion for the Spatial Placement and/or coating of Lens Components that can be capable of serving particular purposes.

In some embodiments of the present invention, the Spatial Placement and/or coating of Lens Components can be improved by Spatially Polymerizing portions of the Fluent Lens Reactive Media by projecting controlled actinic radiation towards the Lens Precursor device. The control of the actinic radiation may include, for example, the use of a voxel based lithography method using a digital micromirror device ("DMD"), a laser, or the use of a photomask. The Spatially Polymerized portions can provide more precise positioning of Lens Components and may include polymerizing design patterns to serve a particular purpose corresponding to the included Lens Components. For example, in some embodiments Spatially Polymerized portions may include fixing at least a portion of the Optic Zone prior to depositing any Lens Components to ensure the optical corrective properties of the ophthalmic Lens remain unchanged. Alternatively, in other embodiments where the Lens Components can include an active optical component, it may be desired that at least portions of the periphery around the Lens Components be Spatially Polymerized for precise positioning of the active optical Lens Components.

In other aspects of the present invention, Lens Components can include colorants, active chemicals, such as active drugs and vitamins, and/or electrical components. Some Lens Components can be in the form of coated antimicrobial nano-particles or may additionally be coated therewith and affixed, either by chemical bonding or mechanically through post-placement polymerization, at specific three dimensional locations on or in the Ophthalmic Lens. Placement may additionally be controlled to form design patterns that can allow for specific functionality.

Spatial Polymerization of the portions of the Fluent Lens Reactive Media can be according to actinic radiation intensity and/or pattern profiles defined mathematically, for example, by polymerization control parameters including one or more of: height, width, length, and shape, and/or, iteratively, to achieve the specific functionality desired of the Ophthalmic Lens. Specific functionality can include, for example, one or more of: fixed optical correction properties or electro-active optical varying properties, cosmetic, antimicrobial, and therapeutic functionality.

### BRIEF DESCRIPTION OF THE DRAWINGS

Fig. 1 illustrates method steps that may be used to implement some aspects of the present invention.
Fig. 2 illustrates an exemplary cross sectional representation of a Lens Precursor.
Fig. 3 illustrates exemplary curing patterns that can be useful for color contact Lenses.
Fig. 4 illustrates exemplary curing patterns that can be useful for electro-active contact Lenses.
Fig. 5 illustrates an exemplary fixing apparatus that may be useful in some embodiments of the present invention.
Fig. 6 illustrates yet another exemplary fixing apparatus that may be useful in some embodiments of the present invention.
Fig. 7 illustrates an exemplary model output for formed thickness versus time of exposure at various exposure intensities.
Fig. 8 illustrates an exemplary automation apparatus that may be used to place and locate Lens Components in some embodiments.

### DETAILED DESCRIPTION OF THE INVENTION

The present invention provides for a method and apparatus to Spatially Polymerize portions of the Fluent Lens Reactive Media of a Lens Precursor Device to affix Lens Components in or on an ophthalmic Lens to thereby provide specific functionality.

In the following sections, detailed descriptions of embodiments of the invention are given. The description of both preferred and alternative embodiments though detailed are exemplary embodiments only, and it is understood to those skilled in the art that variations, modifications, and alterations may be apparent. It is therefore to be understood that said exemplary embodiments do not limit the broadness of the aspects of the underlying invention. Method steps described herein are listed in a logical sequence in this discussion; however, this sequence in no way limits number of steps required or the order in which they may be implemented unless specifically stated.

### GLOSSARY

In the description and claims directed to the presented invention, various terms may be used for which the following definitions will apply:
"Antimicrobial Nanoparticles" as used herein, Antimicrobial Nanoparticles refer to particles that can be capable of reducing contamination and microbial growth resulting, for example, from contamination or protein buildup in ophthalmic lenses. Nanoparticles may include various metals or mixtures of metals with demonstrable antimicrobial activity, such as palladium, tin and gold, and can range in particle sizes from 10 nanometers to 100 nanometers but may be preferably from 30 nanometers to 50 nanometers. Coatings may be used to coat one or more of pigments, active agents such as drugs or vitamins, electrical components, photo reactors, and other Lens Components that may be found in Ophthalmic Lenses.
"DMD" as used herein, a digital micro-mirror device is a bistable spatial light modulator consisting of an array of movable micro-mirrors functionally mounted over a CMOS SRAM. Each mirror is independently controlled by loading data into the memory cell below the mirror to steer reflected light, spatially mapping a pixel of video data to a pixel on a display. The data electrostatically controls the mirror's tilt angle in a binary fashion, where the mirror states are either +X degrees (on) or -X degrees (off). For current devices, X can be either 10 degrees or 12 degrees (nominal). Light reflected by the on mirrors then is passed through a projection lens and onto a screen. Light reflected by the off mirrors is reflected to create a dark field, and defines the black-level floor for the image. Images are created by gray-scale modulation between on and off levels at a rate fast enough to be integrated by the observer. The DMD (digital micro-mirror device) can be a projection system using digital light processing ("DLP") technology.
"DMD File" as used herein, refers to a collection of data points, representing DMD mirror locations in 2-dimensional or 3-dimensional space and, for example, desired thickness values of a Lens Design, or Lens Precursor at a mirror location. DMD Files may have various formats, with (x, y, th) and (r, 0, th) being the most common where, for example, "x" and "y" are Cartesian coordinate locations of DMD mirrors, "r" and "0" are polar coordinate locations of DMD mirrors, and "th" represents desired thicknesses. In some embodiments, a DMD File may be time and/or radiation intensity based.
"Fabrication Process Conditions" as used herein, refers to settings, conditions, methods, equipment and processes used in fabrication of one or more of a Lens Precursor, a Lens Precursor Form, and a Lens.
"Fluent Lens Reactive Media" as used herein, means a Reactive Mixture that is flowable in either its native form, reacted form, or partially reacted form and may be formed upon further processing into a part of an Ophthalmic Lens.
"Free-form" as used herein "free-formed" or "free-form" refers to a surface that is formed by crosslinking of a Reactive Mixture via exposure to actinic radiation on a voxel by voxel basis, with or without a fluent media layer, and is not shaped according to a cast mold, lathe, or laser ablation. Detailed description of Free-form methods and apparatus are disclosed in United States Patent Application Serial No. 12/194,981 (VTN5194USNP) and in United States Patent Application Serial No. 12/195,132 (VTN5194USNP1).
"Iterative Fabrication Process" as used herein, refers to a process of exercising an iterative loop by using one or both of design and Fabrication Process Conditions in order to fabricate a Lens, Lens Precursor Form, or Lens Precursor that can be closer to a desired design than its predecessor.
"Lens" and sometimes referred to as "Ophthalmic Lens" as used herein, refer to any ophthalmic device that resides in or on the eye. These devices may provide for optical correction, enhanced vision, or may be therapeutic, or cosmetic. For example, the term Lens may refer to a contact Lens, intraocular Lens, overlay Lens, ocular insert, optical insert or other similar device through which vision is corrected or modified, or through which eye physiology is cosmetically enhanced (e.g., iris color) without impeding vision. In some embodiments, the preferred Lenses of the invention are soft contact Lenses and are made from silicone elastomers or hydrogels, which include but are not limited to silicone hydrogels, and fluorohydrogels.
"Lens Components" as used herein, can include but are not limited to pigments, electrical components, UV blockers, tints, photoinitiators, catalysts, optical components, and/or active agents suitable to provide for specific functionality of an Ophthalmic Lens. Functionality may include, for example, one or more of: optical correction, enhanced vision, cosmetic effects, and therapeutic functionality.
"Lens Design" as used herein, refers to form, function and/or appearance of a desired Lens, which if fabricated, may provide functional characteristics comprising but not limited to optical power correction, color appearance, therapeutic functionality, wearability, acceptable permeability, shape, composition, conformability, acceptable Lens fit (e.g., corneal coverage and movement), and acceptable Lens rotation stability.
"Lens Precursor" as used herein, means a composite object consisting of a Lens Precursor Form and Fluent Lens Reactive Media in contact with a Lens Precursor Form that may be rotationally symmetrical or non-rotationally symmetrical. For example, in some embodiments Fluent Lens Reactive Media may be formed in the course of producing a Lens Precursor Form within a volume of Reactive Mixture. Separating a Lens Precursor Form and Fluent Lens Reactive Media from a volume of Reactive Mixture used to produce a Lens Precursor Form may generate a Lens Precursor. Additionally, a Lens Precursor may be converted to a different entity by either the removal of an amount of Fluent Lens Reactive Media or the conversion of an amount of Fluent Lens Reactive Media into non-fluent incorporated material.
"Lens Precursor Form" as used herein, refers to a non-fluent object with at least one optical quality surface, which may be consistent with being incorporated upon further processing into an ophthalmic Lens.
"Optic Zone" as used herein, refers to the region of the lens or Lens Precursor in which a wearer of the lens sees after the lens is formed.
"Product" as used herein, refers to a desired Lens or Lens Precursor. The product can be either a "Standard Product" or a "Custom Product."
"Reactive Mixture" or "RMM" (reactive monomer mixture) refer to a monomer or prepolymer material which may be cured and crosslinked or crosslinked to form an ophthalmic Lens. Various embodiments may include Lens forming mixtures with one or more additives such as: UV blockers, tints, photoinitiators or catalysts, and other additives one might desire in ophthalmic Lenses such as, contact or intraocular Lenses.
"Spatially Polymerized" as used herein, refers to polymerized portions of Fluent Lens Reactive Media of a Lens Precursor polymerized either by one or more exposures of controlled actinic radiation or controlled chemical reactions.
"Spatial Placement" as used herein, refers to placing Lens Components upon Fluent Lens Reactive Media or Spatially Polymerized 3-dimensional space locations in or on a Lens Precursor. Moreover, the Spatial Placement may subsequently provide for affixing Lens Components on a finished Lens Product, for example, through post placement exposure of radiation.
"Substrate" as used herein, refers to a physical entity upon which other entities may be placed or formed.
"Voxel" as used herein, also referred to as "Actinic Radiation Voxel" is a volume element, representing a value on a regular or irregular grid in 3-dimensional space. A Voxel may be viewed as a three dimensional pixel, however, wherein a pixel represents 2D image data and a Voxel includes a third dimension. In addition, wherein Voxels are frequently used in the visualization and analysis of medical and scientific data, in the present invention, a Voxel is used to define the boundaries of an amount of actinic radiation reaching a particular volume of Reactive Mixture, thereby controlling the rate of crosslinking or polymerization of that specific volume of Reactive Mixture. By way of example, Voxels are considered in the present invention as existing in a single layer conformal to a 2-D mold surface wherein the Actinic Radiation may generally be directed to the 2-D surface and in a common axial dimension of each Voxel. As an example, specific volume of Reactive Mixture may be crosslinked or polymerized according to 768x768 Voxels.

The present invention includes methods and apparatus used to process a Lens Precursor Device to manufacture an Ophthalmic Lens with specific functionality. Functionality can result from both the ability to affix Lens Components at desired 3-dimensional space locations in or on the Ophthalmic Lens, and the ability to coat various Lens Components using the method steps provided hereon.

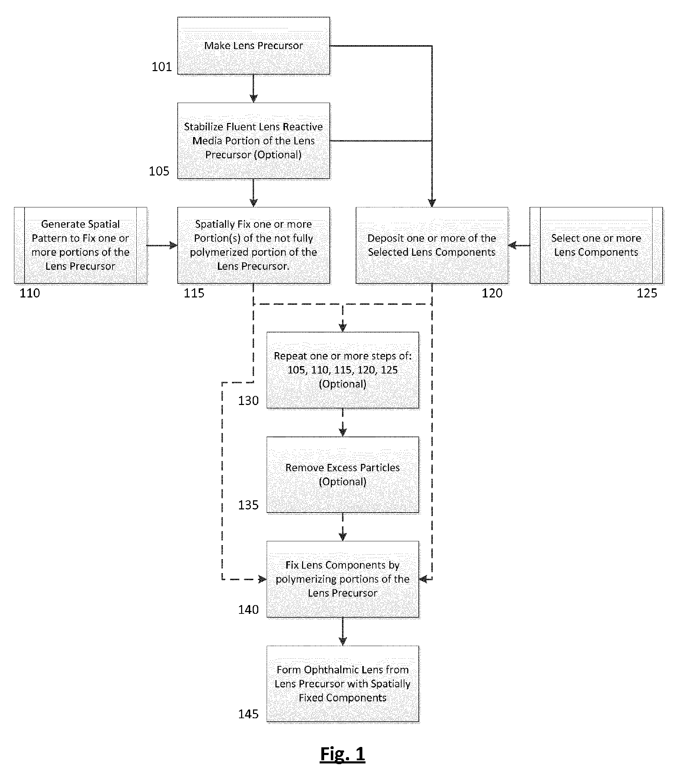

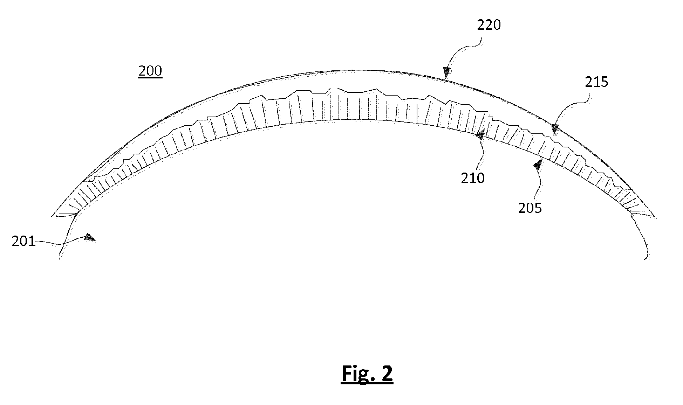

Referring now to Fig. 1, method steps that may be used to implement some aspects of the present invention are shown. At 101, a Lens Precursor device is made. Some Lens Precursor embodiments can preferably be made using voxel by voxel methods as described in other previous inventions referenced herein, but other methods can include, for example, other voxel based lithography methods, stereolithography, and cast molding techniques. As defined, a Lens Precursor is a composite object comprising a non-fluent portion with at least one optical quality surface and Fluent Lens Reactive Media in contact with at least a portion of said non-fluent portion. Generally, as depicted in the exemplary Lens Precursor 200 of Fig. 2, Fluent Lens Reactive Media 215 is in contact with at least a portion of the non-fluent portion 210 comprising the optical quality surface 205 resting on the surface of a substrate 201.

Referring back to Fig. 1, at 105 the Fluent Lens Reactive Media portion of the Lens Precursor may be stabilized. Stabilization can include controlling the amount of Fluent Lens Reactive Media, for example, by one or more of: wicking excess Fluent Lens Reactive Media, controlling the speed of removal from excess Fluent Lens Reactive Media used to form the Lens Precursor, controlling Fabricating Process Conditions, and letting it settle for a period of time.

At 110, a spatial pattern to fix portions of the Fluent Lens Reactive Media of the Lens Precursor can be generated. The spatial pattern can include, for example, a high accuracy DMD File that can project radiation at specified intensities, durations, patterns, directions, and voxel 3 dimensional locations to polymerize or spatially fix one or more portion(s) of the Fluent Lens Reactive Media portion of the Lens Precursor 115. Other spatial patterns can comprise photomasking techniques or chemical polymerization of the Fluent Lens Reactive Media.

At 125, Lens Components can be selected as per a Lens design. Recently, Ophthalmic Lens designs may include one or more of: vision correction, cosmetic effects, vision enhancement, and therapeutic functionality. Accordingly, as defined Lens Components can include pigments, electrical components, UV blockers, tints, photoinitiators, catalysts, optical components, antimicrobial coatings and active agents suitable to provide for the intended functionality of an Ophthalmic Lens Product. At 120, one or more of the selected Lens Components may be deposited onto at least a region of the Lens Precursor Device. Different methodology can be used to deposit Lens Components depending on the accuracy required, size of the component, and the Manufacturing Process Conditions used. Methods to deposit lens components may include ink jetting techniques, spraying, electroplating, vapor deposition, immersion into a liquid, and the use of automation.

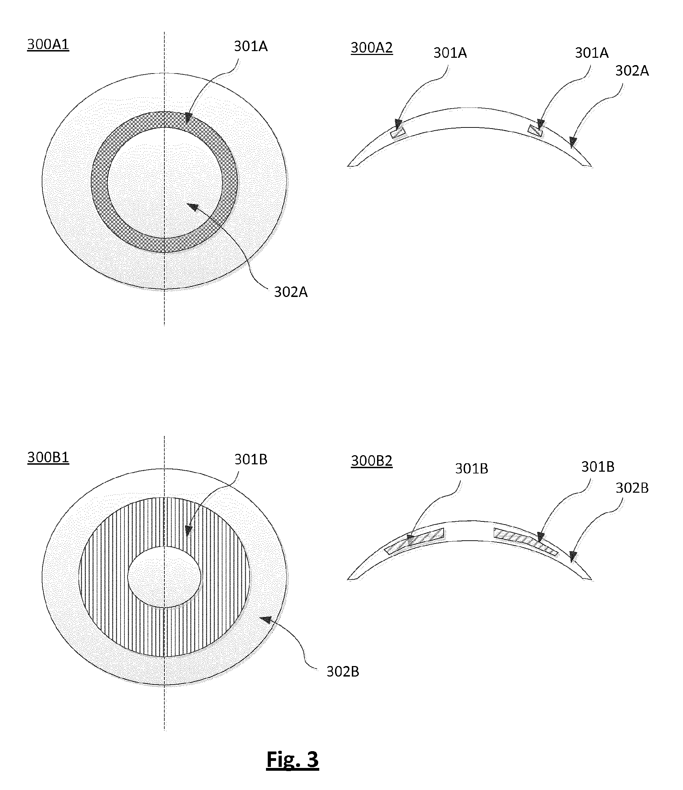

In the following sections, the description of the exemplary embodiments depicted in Figs. 3-8 will be used to better describe method steps 125 - 145 of Fig. 1. Beginning at Fig. 3, exemplary curing patterns that can be useful to include pigments in Ophthalmic Lenses are depicted. At 300A1 and 300A2, the top view and a side cross section of an exemplary color contact Lens are respectively depicted. In the present exemplary embodiment, pigments may be deposited and affixed in the Lens material 302A to form a ring or cylinder like pigmented pattern 301A that can define or accentuate the limbal ring portion of the wearer's eye. The ability to Spatially Place and Spatially Polymerize pigments may provide different cosmetic effects than those provided by known manufacturing methods and apparatuses. Known methods and apparatuses used to manufacture color lenses are generally limited to pad printing a color pattern onto the surface of the cured lens and consequently limits the types of colorants that can be used and the pattern to two dimensions. To the contrary, the present invention can provide for the ability to Spatially Locate Lens Components, and specifically to pigment particles, providing new color effects in part due to the three dimensional placement.

Referring back to Fig. 3, at 301B and 301B2 the top view and a cross section of a contact lens that includes a color pattern that is capable of changing or enhancing the eye color of a user are respectively depicted. The pattern 301B included in the lens material 302B may be designed to change the color of a wearer's eye according to measured eye parameters and values. Additionally, the volume depth and pigments included may be used to generate improved cosmetic effects or additional functionality such as holograms, or anticounterfeit marks, as may be desired. Other functionality in embodiments where the colored portion can include at least a portion of a surface portion of the lens may include, for example, pigment particles which may be coated Antimicrobial Particles or nano-surface patterns that can be useful to decrease Lens contamination.

In some embodiments of the present invention, pigment particles in Lenses can include particles, such as, tints, colorants, and dyes which may be Spatially Placed to thereby overcome pad printing limitations and provide significantly improved cosmetic effects. Spatial fixing of pigments in the limbal ring 301A pattern or eye color changing or enhancing patterns to can occur in various manners with the steps provided and exemplary apparatus components presented below.

Manufacturing steps to Spatially Deposit and fix pigment components may include generating a fixing pattern to spatially fix one or more portion(s) of the Fluent Lens Reactive Media portion of the Lens Precursor 115. In the present example, the fixing apparatus can include a DMD capable of projecting sufficient actinic radiation to polymerize volumes of Fluent Lens Reactive Media according to a programmed DMD File. The programmed DMD File can provide instructions to the DMD to polymerize and fix, for example, the Lens edge and the Optic Zone of the Lens Precursor to thereby avoid changing optical correction properties and lens fit. Subsequently, Selected Pigment particles may be deposited 120 in one or more remaining Fluent Lens Reactive Media portion(s). Pigment particles can include an array of colors and may be deposited using a variety of techniques. For example, lighter pigments may be deposited first in a designated portion of the lens followed by darker pigments in regions therein. This process can allow for the change of colors and color effects accordingly.

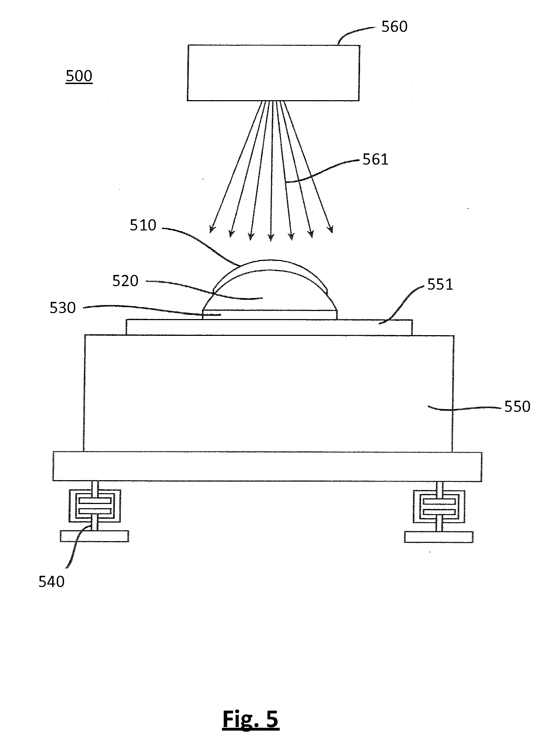

An exemplary fixing apparatus that can implement a DMD to control actinic radiation is depicted at 500 in Fig. 5. One aspect allows the flowing system to be isolated from movements or vibrational energy and to be generally stable. This can be accomplished, for example, with a structure 550 supported upon a vibration isolation system 540. As the force of gravity is also employed in such embodiments, it may be preferred for the structure 550 to have a flat surface that is leveled. A Lens Precursor can be supported by the forming optic surface 520 of a forming optic holder 530 which may be attached with a holding apparatus 551. In some embodiments, automated timing equipment may be used to control a minimum amount of time for the fluent media to achieve a relatively stable state prior to or subsequent to different fixing steps.

In some embodiments, the apparatus used for stabilization includes attached components allowing for the exposure of the Lens Precursor to one or more actinic irradiation steps for the purpose of spatially fixing the Lens Precursor into an ophthalmic Lens. In some embodiments, fixing radiation causes photochemical reactions to occur only in the Fluent Lens Reactive Mixture 510. In alternative embodiments, other parts of a Lens Precursor, such as, for example, a Lens Precursor Form may undergo one or more chemical changes under the fixing radiation. Other embodiments that constitute variations based on the nature of the materials comprising the Lens Precursor may be obvious to one skilled in the art from the teachings of the current invention.

In 500, the light source capable of providing fixing radiation is identified as 560 and may preferably be controlled by a DMD. For example, in some embodiments, an AccuCure ULM-2-420 light source with controller from Digital Light Lab Inc. (Knoxville, Tenn. USA) 560 may constitute an acceptable source of the fixing radiation 561. If necessary, after the appropriate parameters are performed for stabilization, the controller for the fixing light source 560 is switched to an on position exposing the Lens Precursor to the fixing radiation 561, and spatially fixing portions of the Fluent Lens Reactive Media. From a general perspective, there may be numerous embodiments relating to the stabilizing or otherwise moving the Fluent Lens Reactive Mixture across the Lens Precursor Form 530 surface and then in some manner irradiating with fixing radiation.

In another aspect, some embodiments may include chemical or physical changes to the Fluent Lens Reactive Mixture 510. By way of example, an alternative embodiment may include the introduction of a solvent material in and around the fluent reactive chemical in such a manner to change its fluent nature. Additionally, said added material may affect the surface energy properties of the Fluent Lens Reactive Media and in relation to added Lens Components in the Lens Precursor. Numerous alternative embodiments of a general nature relating to altering properties of the fluent chemical system may be anticipated by the nature of this invention.

At a fundamental level, the nature of the Reactive Mixture may interact with the various embodiments of apparatus to enable different results. It should be apparent that the nature of the stabilization and fixing apparatus 500, and variation in embodiments that derive from changing the fundamental chemical components in the Reactive Mixture include embodiments within the scope of the invention. By way of example, this could include for example changes in the wavelength employed for fixing radiation and may introduce apparatus embodiments that have flexibility in said wavelength of fixation radiation.

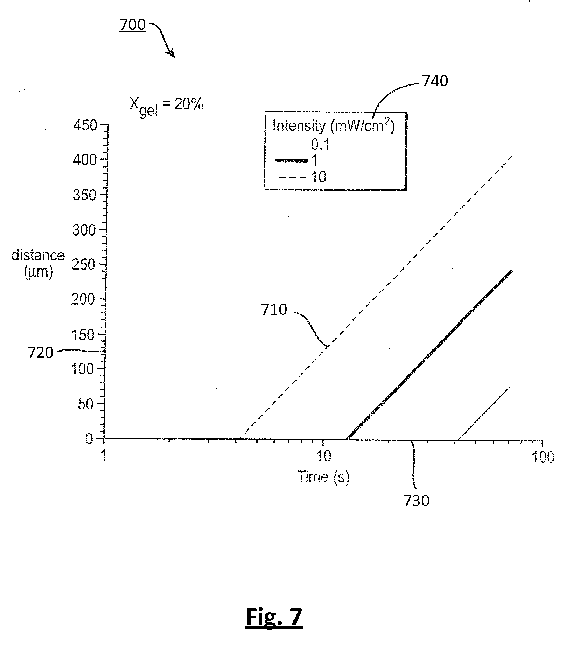

For example, at 700 in Fig. 7, provides an exemplary representation for a model output for formed thickness versus time of exposure at different exposure intensities is provided. The estimate of a distance of the polymerized portion from the surface of the forming optic surface is plotted as 720, versus the time of irradiation 730. And, these values are displayed for the calculation of three different incident intensities 740. Accordingly, fixed patterns can be polymerized at a distance thickness for a given radiation intensity and duration. Following the discussion of the digital light processing apparatus above, since this apparatus operates as a digital intensity control the time would be related to the integrated time that a mirror element spent in the on state. The intensity that actually occurs at a particular Voxel location may be measured precisely by some technique, but the power of the apparatus can be that a measurement of the produced lens product of one or more passes may be compared against the target thickness, and the difference may be used to drive a time difference for a particular intensity by referring to the relationship. For example, if the intensity reaching a Voxel location with the mirror "on" is 10 mW/cm2, then referring the adjustment that would result from the model could be found by sliding along the curve 710 to a new thickness target and generating a new time parameter. The controlling algorithm may use this calculated time target to adjust the time of exposure on each of a series of "movie" frames to an average amount that in total equals the target time. In another manner, it could use the maximum time per frame and then a last intermediate frame can have a fraction of the maximum time per frame and then the remaining frames can have an off state defined. Following, the adjusted time may be used to make a next lens and the process repeated.

As previously mentioned, Lens Components, and in particular pigments particles, may be deposited using one or more of: ink jetting and vapor deposition techniques, sprayed, and applied in liquid form onto the entire surface of the lens precursor, for example, by immersing the lens precursor into a bath of liquid dye. Variations and implementations that include more than one way of depositing pigments onto the Fluent Lens Reactive Media may be performed. Additionally, at 103 more than one pigment particle type or shade may be included at different stages when one or more steps from 105-125 are repeated. When repeating various method steps embodiments may include for example, diffused pigment particles of different types distributed at different depth locations depending on the chemical composition of the pigment particles, time in-between radiation projections and fixing patterns.

An additional aspect of Spatially Curing portions of the Fluent Lens Reactive Media may become useful when pigment particles are applied to an entire surface or the entire Lens Precursor. For example, when excess particles may be removed 135. Removal of excess particles may occur simply by rinsing the fixed portions or the application of a solvent and may occur prior to or after fixing the deposited pigment particles 140 to form the Ophthalmic Lens 145. In embodiments, where the rinsing occurs prior to the fixing of all of the Fluent Lens Reactive Mixture, unwanted removal of the pigments deposited onto the Fluent Lens Reactive Mixture can be achieved since the degree of curing of said portions leaves a tacky surface or due to chemical bonding of the pigment particles.

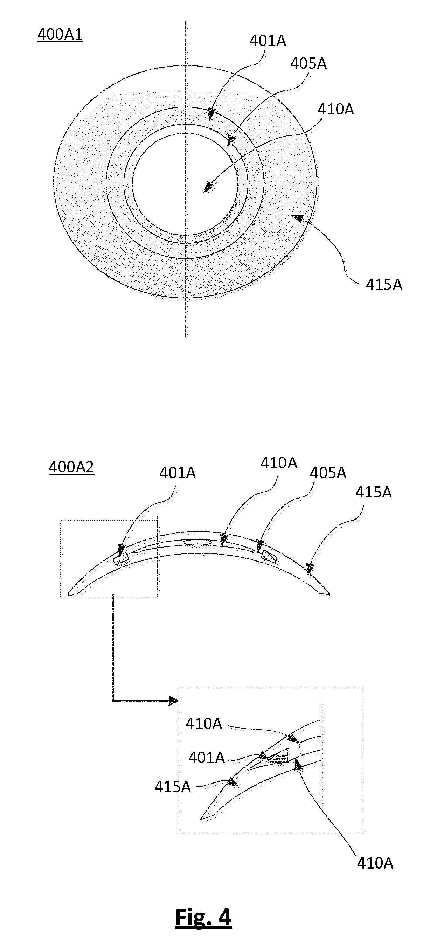

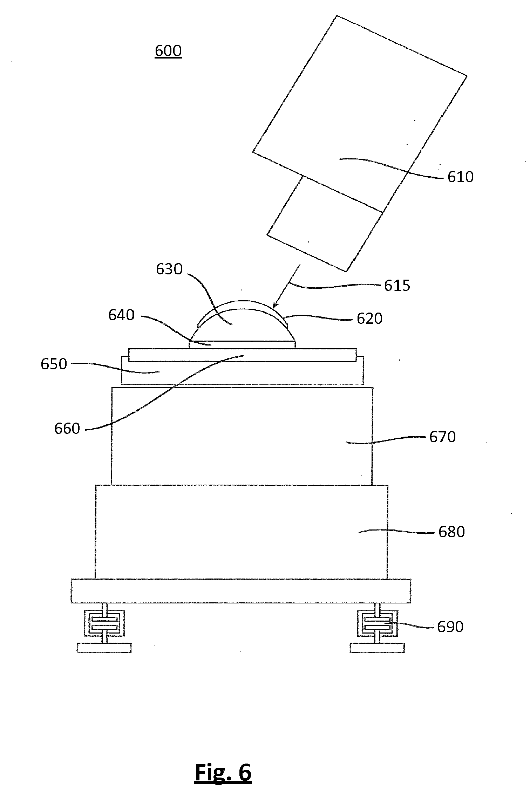

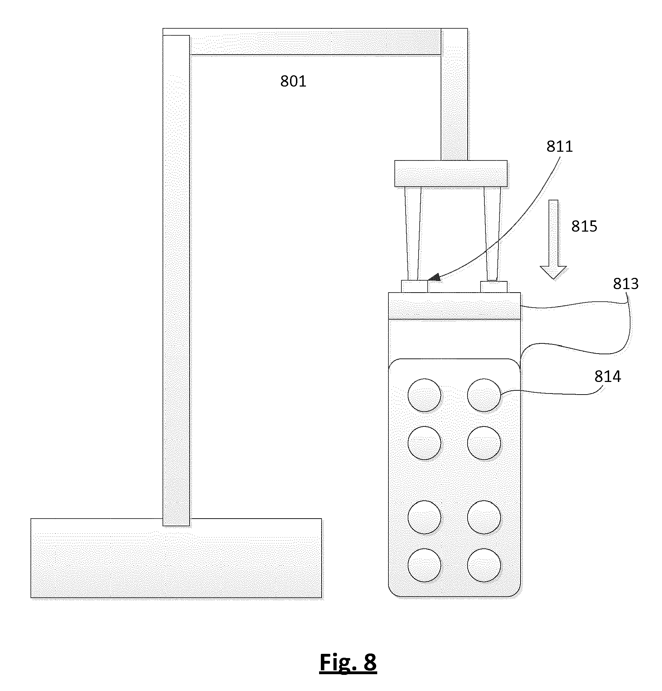

Referring now to Fig. 4, exemplary curing patterns that can be useful for depositing and spatially locating electro-active optical components of the present invention are depicted. Accordingly, at 400A1 and 400A2 a top view and cross section of a contact lens with Electrical Lens Components are respectively depicted. In the present exemplary embodiments, Lens Components can include electrical components which may be encapsulated by lens material 415A. Electrical components may include for example, a media insert comprising a variable optic 410A, electrical conductive material 405A and microprocessor 401A. The number of Lens Components, including electrical components, optical components and location should not be limited or interpreted to be limited by the present examples presented to provide and enable the various method steps of Fig. 1. Accordingly, electrical components may be mechanically placed or deposited upon the Fluent Lens Reactive Media and affixed in volume portions of the Lens Precursor. Moreover, exemplary apparatus of Figs. 6 and 8 are presented but many modifications and equivalents will be apparent to one skilled in the art, from this disclosure.

Referring now to Fig. 6, an apparatus to control actinic radiation is depicted at 600. Similar to the exemplary of apparatus Fig. 5, a flowing system can be included to isolate the Lens Precursor from movements or vibrational energy and be generally stable. For example, with a structure 650 supported upon a vibration isolation system 640 and through the force of gravity when a leveled flat surface is included. A Lens Precursor can be supported by the forming optic surface 620 of a forming optic holder 630 which may be attached with a holding apparatus 651. In some embodiments, automated timing and mechanical robotic equipment and stabilization components may also be included and in logical communication with a processor. Different from Fig. 5, the present embodiment may provide for controlled fixing actinic radiation and patterns to Spatially Polymerize the Fluent Lens Reactive Mixture 610 through a laser 610 known to be suitable to lithographic applications, or additionally one, such as, a yttrium aluminum garnet laser ("YAG laser") used in ophthalmic refractive procedures. Actinic Radiation 615 may be projected towards the Fluent Lens Reactive Media based on programmed patterns and throughout different steps of the Ophthalmic Lens forming process.

Where a laser is implemented, automation may be used both for controlled curing and placement of Lens Components. Ink Jetting techniques may also be incorporated into the forming and fixing apparatus. For example, so that subsequent to the locating and depositing of one type of Lens Components a fixing radiation to neighboring portions can be projected to affix the Lens Component and allow for other Lens Components to be deposited on remaining Fluent Lens Reactive Media or upon the previously deposited Lens Components without causing a change in their preferred product design location. Mechanical placement can also include any automation, robotic movement, or even human placement of the Lens Component within one or more holding points of a cast mold part, or preferably created by spatially polymerizing the Fluent Lens Reactive Media of the Lens Precursor, such that the polymerization of a Reactive Mixture contained by a variant mold part will include the electrical component in a resultant Ophthalmic Lens.

Referring now to Fig. 8, multiple mold parts 814 may be contained on a pallet 813 capable of supporting one or more Lens Precursor processing parts 801 and incorporated with the fixing apparatus of Fig. 6. Embodiments can include mechanical positioning automated elements 811 individually capable of positioning 815 one or more Lens Component in one or multiple molds 814.

In some embodiments one or more binder layer can be applied using the exemplary components of the exemplary apparatus of Figs. 8 and 6. Binder layers may be applied, for example, to a mold part or at least a portion of the Lens Precursor prior to placement of the electrical component. A binder layer can include, by way of non-limiting example, a pigment, a monomer or an active agent and may be used, for example, for adhesion purposes. Accordingly, in some embodiments, a binding layer can include a binding polymer that is capable of forming an interpenetrating polymer network with a lens material, for example, so that the need for formation of covalent bonds between the binder and lens material to form a stable lens can be eliminated.

The binding polymers of the invention can include, for example, those made from a homopolymer or copolymer, or combinations thereof, having similar solubility parameters to each other and the binding polymer has similar solubility parameters to the lens material. Binding polymers may contain functional groups that render the polymers and copolymers of the binding polymer capable of interactions with each other. The functional groups can include groups of one polymer or copolymer that interacts with those of another in a manner that increases the density of the interactions helping to inhibit the mobility of and/or entrap particles, such as pigment particles. The interactions between the functional groups may be polar, dispersive, or of a charge transfer complex nature. The functional groups may be located on the polymer or copolymer molecular backbones or be pendant from the molecular backbone structures.

By way of non-limiting example, a monomer, or mixture of monomers, that form a polymer with a positive charge may be used in conjunction with a monomer or monomers that form a polymer with a negative charge to form the binding polymer. As a more specific example, methacrylic acid ("MAA") and 2-hydroxyethylmethacrylate ("HEMA") may be used to provide a MAA/HEMA copolymer that is then mixed with a HEMA/3-(N N-dimethyl) propyl acrylamide copolymer to form the binding polymer. As another example, the binding polymer may be composed of hydrophobically-modified monomers including, without limitation, amides and esters of the formula: CH3(CH2)x-L-COCHR=CH2 wherein L may be -NH or oxygen, x may be a whole number from 2 to 24, K may be a C1 to C6 alkyl or hydrogen and preferably is methyl or hydrogen. Examples of such amides and esters include, without limitation, lauryl methacrylamide, and hexyl methacrylate. As yet another example, polymers of aliphatic chain extended carbamates and ureas may be used to form the binding polymer. Binding polymers suitable for a binding layer may also include a random block copolymer of HEMA, MAA and lauryl methacrylate ("LMA", a random block copolymer of HEMA and MAA or HEMA and LMA, or a homopolymer of HEMA. The weight percentages, based on the total weight of the binding polymer, of each component in these embodiments is about 93 to about 100 weight percent HEMA, about 0 to about 2 weight percent MAA, and about 0 to about 5 weight percent LMA.

Accordingly, a binding polymer layer may be made by any convenient polymerization process including, without limitation, radical chain polymerization, step polymerization, emulsion polymerization, ionic chain polymerization, ring opening, group transfer polymerization, atom transfer polymerization, and the like. Preferably, a thermal-initiated, free-radical polymerization is used. Conditions for carrying out the polymerization are within the knowledge of one ordinarily skilled in the art.

Coatings may be also achieved by use of electrostatic, dispersive, or hydrogen bonding forces to cover a desired surface of the Lens Precursor or Lens Components.

Moreover, active agents may also be contained in coatings or be deposited using the aforementioned methods to deposit them onto the Fluent Lens reactive material of the Lens Precursor. The active agent may be included in any Lens that is compatible with the active drug or reagents to be released to the ocular surface. Release manners can include, for example, the use of a microfluidic pump, or by dissolving or degrading of the active agent into the lens forming material to cause diffusion of the active drug from the material during wear. Any number of material including, without limitation, naturally occurring and synthetic polymeric materials, and non-polymeric materials comprising, inorganic materials including, without limitation, porous ceramics, lipids, waxes and the lack and combinations thereof may be used.

Preferably, the active agent containing-material is a polymeric material, in which at least one active agent is disposed on, dispersed throughout, or otherwise contained. Depending upon the active agent containing material selected, the active agent can be released from the material almost immediately, or the active agent can be released in a sustained manner over a desired period of time. For example, a polymeric material may be used that is composed of one or more polymers that are at least partially soluble in water. When such polymeric material is exposed to the aqueous environment of the tear fluid, it will preferably dissolve and release the active agent as it dissolved.

Alternatively in some embodiments, the active agent may be dispensed with the use of the incorporated microfluidic pump that is capable of dispensing the active agent through energized channels and onto the ophthalmic environment. Examples of active drugs or agents may include for example, anti-infective agents including, without limitation, tobramycin, moxifloxacin, ofloxacin, gatifloxacin, ciprogloxacin, gentamicin, sulfisoxazolone diolamine, sodium sulfacetamide, neomycin propanidine, sulfadiazine and pyrimethamine.

Additionally or alternatively, the ophthalmic device may deliver antiviral agents, including without limitation, formivirsen sodium, foscarnet sodium, trifluridine, tetracaine HCL, natamycin and ketocaonazole. Furthermore, analgesics may also be included and can include, for example and without limitation, acetaminophen, and codeine, ibuprofen and tramadol. Finally, some embodiments may also deliver active drugs or agents that additionally can comprise, for example and without limitation, vitamins, antioxidants and nutraceuticals including vitamins A, D and E, lutein, taurine, glutathione, zeaxanthin, fatty acids and the like.

Although invention may be used to provide hard or soft contact lenses made of any known lens material, or material suitable for manufacturing such lenses, preferably, the lenses of the invention are soft contact lenses having water contents of about 0 to about 90 percent. More preferably, the lenses are made of monomers containing hydroxy groups, carboxyl groups, or both or be made from silicone-containing polymers, such as siloxanes, hydrogels, silicone hydrogels, and combinations thereof. Material useful for forming the lenses of the invention may be made by reacting blends of macromers, monomers, and combinations thereof along with additives such as polymerization initiators. Suitable materials include, without limitation, silicone hydrogels made from silicone macromers and hydrophilic monomers.

### Conclusion

A number of embodiments of the present invention have been described. While this specification contains many specific implementation details, these should not be construed as limitations on the scope of any inventions or of what may be claimed, but rather as descriptions of features specific to particular apparatus embodiments of the present invention.

Certain apparatus and Lens features that are described in this specification in the context of separate embodiments can also be implemented in combination in a single embodiment. Conversely, various features that are described in the context of a single embodiment can also be implemented in combination in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while method steps are depicted in the drawings in a particular order, this should not be understood as requiring that such method steps be performed in the particular order shown or in sequential order, or that all illustrated operations be performed, to achieve desirable results. In certain circumstances, multitasking and parallel may be advantageous. Moreover, the separation of various apparatus components in the embodiments described above should not be understood as requiring such separation in all embodiments, and it should be understood that the described apparatus components and method steps can generally be integrated together in a single apparatus or method or used in multiple apparatus or methods.

Thus, particular embodiments of the subject matter have been described. Other embodiments are within the scope of the following claims. In some cases, the method steps recited in the claims can be performed in a different order and still achieve desirable results. In addition, the processes depicted in the accompanying figures do not necessarily require the particular order show, or sequential order, to achieve desirable results. Nevertheless, it will be understood that various modifications may be made without departing from the spirit and scope of the claimed invention.

A non-exhaustive list of various aspects and examples of the present invention are set out in the following numbered clauses:
Clause 1. An apparatus for polymerizing a flowable reactive mixture portion in contact with a non-fluent ophthalmic object with at least one optical surface and placing ophthalmic lens components onto at least a portion of the flowable reactive mixture portion, the apparatus comprising:
   a substrate comprising an arcuate optical quality surface; wherein at least a portion of said arcuate optical quality surface supports the non-fluent ophthalmic object with at least one optical surface in contact with the flowable reactive mixture portion;
   a source of radiation controllable to polymerize one or more portions of the flowable reactive mixture portion in contact with the non-fluent ophthalmic object with at least one optical surface; and
   a deposition tool controlled by a processor operable to deposit one or more ophthalmic lens components onto at least a portion of the flowable reactive mixture portion in contact with a non-fluent ophthalmic object with at least one optical surface.
Clause 2. The apparatus of Clause 1, wherein the arcuate optical quality surface portion that supports the lens precursor remains stationary during the polymerization of the flowable reactive mixture in contact with a non-fluent ophthalmic object with at least one optical surface.
Clause 3. The apparatus of Clause 1, additionally comprising a spatial light modulator projecting at least part of the radiation from the radiation source to the flowable reactive mixture in contact with a non-fluent ophthalmic object with at least one optical surface.
Clause 4. The apparatus of Clause 3, wherein the spatial light modulator includes a digital mirror device.
Clause 5. The apparatus of Clause 3, wherein the spatial light modulator includes a photomask.
Clause 6. The apparatus of Clause 1, wherein the source of radiation includes a laser.
Clause 7. The apparatus of Clause 1, additionally comprising an apparatus controlled by a processor operable to more the source of radiation in relation to the lens precursor.
Clause 8. The apparatus of Clause 7, wherein the ophthalmic lens components are deposited onto at least a portion of the flowable reactive mixture in contact with a non-fluent ophthalmic object with at least one optical surface using ink jetting techniques.
Clause 9. The apparatus of Clause 1, wherein the ophthalmic lens components are deposited onto at least a portion of the flowable reactive mixture in contact with a non-fluent ophthalmic object with at least one optical surface using spraying techniques.
Clause 10. The apparatus of Clause 1, wherein the ophthalmic lens components are deposited onto at least a portion of the flowable reactive mixture in contact with a non-fluent ophthalmic object with at least one optical surface using vapor deposition techniques.
Clause 11. A method of manufacturing an ophthalmic lens, the method comprising:
   forming a non-fluent ophthalmic object with at least one optical surface in contact with a flowable reactive mixture;
   projecting controlled actinic radiation to polymerize portions of said flowable reactive mixture; and
   depositing one or more ophthalmic lens components onto at least a portion of said flowable reactive mixture.
Clause 12. The method of Clause 11, wherein the flowable reactive mixture portion is stable during the polymerization.
Clause 13. The method of Clause 11, wherein the optic zone of the flowable reactive mixture portion in contact with a non-fluent ophthalmic object with at least one optical surface is polymerized at or above a gel point before depositing the one or more ophthalmic lens components.
Clause 13. The method of Clause 11, wherein the edge perimeter of the flowable reactive mixture portion in contact with a non-fluent ophthalmic object with at least one optical surface is polymerized at or above a gel point before depositing the one or more ophthalmic lens components.
Clause 14. The method of Clause 11, additionally comprising the step of projecting sufficient controlled actinic radiation to polymerize and affix ophthalmic lens components on the formed ophthalmic lens.
Clause 15. The method of Clause 11, additionally comprising the step of projecting sufficient controlled actinic radiation to polymerize and affix ophthalmic lens components in the formed ophthalmic lens.
Clause 16. The method of Clause 11, wherein one or more of the ophthalmic lens components are deposited between different exposures to actinic radiation.
Clause 17. The method of Clause 11, wherein the ophthalmic lens components comprise electrical components.
Clause 18. The method of Clause 11, wherein the ophthalmic lens components comprise pigment particles.
Clause 19. The method of Clause 11, wherein the ophthalmic lens components comprise active agents.
Clause 20. The method of Clause 11, wherein controlled radiation is associated with a voxel of polymerized or partially polymerized flowable reactive mixture and one or more of the transmissions of controlled actinic radiation.
Clause 21. The method of Clause 11, wherein the deposited ophthalmic lens components comprise nano-coated antimicrobial particles.
Clause 22. The method of Clause 21, wherein the nano-coated antimicrobial particles include particle sizes from 30 nanometers to 50 nanometers.

## Claims

1. An apparatus for polymerizing a flowable reactive mixture portion in contact with a non-fluent ophthalmic object with at least one optical surface and placing ophthalmic lens components onto at least a portion of the flowable reactive mixture portion, the apparatus comprising:
a substrate comprising an arcuate optical quality surface; wherein at least a portion of said arcuate optical quality surface supports the non-fluent ophthalmic object with at least one optical surface in contact with the flowable reactive mixture portion;
a source of radiation controllable to polymerize one or more portions of the flowable reactive mixture portion in contact with the non-fluent ophthalmic object with at least one optical surface; and
a deposition tool controlled by a processor operable to deposit one or more ophthalmic lens components onto at least a portion of the flowable reactive mixture portion in contact with a non-fluent ophthalmic object with at least one optical surface.

2. The apparatus of Claim 1, wherein the arcuate optical quality surface portion that supports the lens precursor remains stationary during the polymerization of the flowable reactive mixture in contact with a non-fluent ophthalmic object with at least one optical surface.

3. The apparatus of Claim 1 or claim 2, additionally comprising a spatial light modulator projecting at least part of the radiation from the radiation source to the flowable reactive mixture in contact with a non-fluent ophthalmic object with at least one optical surface, preferably, wherein the spatial light modulator includes:
a) a digital mirror device; or
b) a photomask.

4. The apparatus of any of the preceding claims, wherein the source of radiation includes a laser.

5. The apparatus of any of the preceding claims, additionally comprising an apparatus controlled by a processor operable to move the source of radiation in relation to the lens precursor.

6. The apparatus of any of the preceding claims, wherein the ophthalmic lens components are deposited onto at least a portion of the flowable reactive mixture in contact with a non-fluent ophthalmic object with at least one optical surface using one or more of ink jetting techniques, spraying techniques and vapor deposition techniques.

7. A method of manufacturing an ophthalmic lens, the method comprising:
forming a non-fluent ophthalmic object with at least one optical surface in contact with a flowable reactive mixture;
projecting controlled actinic radiation to polymerize portions of said flowable reactive mixture; and
depositing one or more ophthalmic lens components onto at least a portion of said flowable reactive mixture.

8. The method of Claim 7, wherein the flowable reactive mixture portion is stable during the polymerization.

9. The method of Claim 7 or claim 8, wherein the optic zone of the flowable reactive mixture portion in contact with a non-fluent ophthalmic object with at least one optical surface is polymerized at or above a gel point before depositing the one or more ophthalmic lens components.

10. The method of any of claims 7 to 9, wherein the edge perimeter of the flowable reactive mixture portion in contact with a non-fluent ophthalmic object with at least one optical surface is polymerized at or above a gel point before depositing the one or more ophthalmic lens components.

11. The method of any of claims 7 to 10, additionally comprising the step of projecting sufficient controlled actinic radiation to polymerize and affix ophthalmic lens components:
a) on the formed ophthalmic lens; or
b) in the formed ophthalmic lens.

12. The method of any of claims 7 to 11, wherein one or more of the ophthalmic lens components are deposited between different exposures to actinic radiation.

13. The method of any of claims 7 to 12, wherein the ophthalmic lens components comprise:
a) electrical components;
b) pigment particles; and/or
c) active agents.

14. The method of any of claims 7 to 13, wherein controlled radiation is associated with a voxel of polymerized or partially polymerized flowable reactive mixture and one or more of the transmissions of controlled actinic radiation.

15. The method of any of claims 7 to 14, wherein the deposited ophthalmic lens components comprise nano-coated antimicrobial particles, preferably wherein the nano-coated antimicrobial particles include particle sizes from 30 nanometers to 50 nanometers.
